# EUROPÄISCHE PATENTANMELDUNG

(11) **EP 1 231 785 A2**
(43) Veröffentlichungstag der Anmeldung: **14.08.2002**
(21) Anmeldenummer: 02001301.7
(22) Anmeldetag: 18.01.2002
(51) Int. Cl.: H04N 5/765

(54) **Vorrichtung zur Übertragung von Bild- oder Tonsignalen zwischen einem digitalen Empfangs und/oder Wiedergabegerät und einem digitalen Speicher**

(30) Priorität: 08.02.2001 DE 10105737
(71) Anmelder: GRUNDIG Aktiengesellschaft, 90471 Nürnberg (DE)
(72) Erfinder: Krieger, Peter, c/oGrundig Aktiengesellschaft, 90471 Nürnberg (DE); Horn, Bernhard, c/oGrundig Aktiengesellschaft, 90471 Nürnberg (DE)

(57) **Zusammenfassung**

Die Erfindung betrifft eine Vorrichtung zur Übertragung von Bild- oder Tonsignaldaten zwischen einem digitalen Empfangs- und/oder Wiedergabegerät und einem digitalen Speicher. Das digitale Empfangs- und/oder Wiedergabegerät ist mit einer Schnittstelle für ein Zusatzmodul versehen. An diese Schnittstelle ist ein Adapter angeschlossen, welcher eine weitere Schnittstelle aufweist, mit welcher das digitale Speichermedium kontaktiert ist.

## Beschreibung

Die Erfindung betrifft eine Vorrichtung zur Übertragung von Bild- oder Tonsignalen, welche ein digitales Empfangs- und/oder Wiedergabegerät aufweist, welches mit einer ersten Schnittstelle für ein Zusatzmodul versehen ist, und welches weiterhin mit einem digitalen Speichermedium kontaktiert ist, welches zu einer Abspeicherung von Bild- oder Tonsignalen dient.

Bekannte digitale Speichermedien, die beispielsweise zu einer Abspeicherung von digitalen Audiodaten oder digitalen Videodaten dienen, haben unterschiedliche Gehäusebauformen, innerhalb derer die jeweiligen Speicher angeordnet sind. Zurzeit am Markt befindliche Gehäusebauformen sind beispielsweise eine Multimedia-Card, eine Smartmedia-Card, ein Compactflash und eine SD-Card.

Die zugehörigen elektrischen Schnittstellen sind dabei entweder seriell, sequentiell oder parallel ausgeführt. Bei einer seriellen Ausgestaltung sind keine Adressierleitungen, wenige Steuerleitungen und eine oder wenige Datenleitungen vorgesehen. Bei einer sequentiellen Ausführung sind keine oder wenige Adressierleitungen, wenige Steuerleitungen und acht oder mehr Datenleitungen vorhanden. Im Falle einer parallelen Ausführung sind Adressier-, Daten- und Steuerleitungen parallel vorhanden.

Da bezüglich dieser elektrischen Schnittstellen der Markt einer ständigen Weiterentwicklung unterworfen ist, ist es für die Hersteller von digitalen Empfangs- und/oder Wiedergabegeräten schwierig, ein zukunftssicheres Gerät zu entwickeln, welches alle erforderlichen Schnittstellen zur Verfügung stellt.

Weiterhin ist es sehr kostenaufwendig, ein digitales Empfangs- und/oder Wiedergabegerät zu entwickeln, welches alle vorstehend beschriebenen Schnittstellen elektrisch, mechanisch und softwaremäßig bereitstellt.

Ausgehend von diesem Stand der Technik liegt der Erfindung die Aufgabe zugrunde, einen Weg aufzuzeigen, wie die vorstehend beschriebenen Nachteile vermieden werden können.

Diese Aufgabe wird durch eine Vorrichtung mit den im Anspruch 1 angegebenen Merkmalen gelöst.

Vorteilhafte Ausgestaltungen und Weiterbildungen der Erfindung ergeben sich aus den abhängigen Ansprüchen.

Der Anspruch 12 betrifft einen Adapter zur Verwendung in einer Vorrichtung nach einem der vorhergehenden Ansprüche.

Die Vorteile der Erfindung bestehen insbesondere darin, dass die Grundkosten für das digitale Empfangs- und/oder Wiedergabegerät niedrig gehalten werden können, da über ein und dieselbe Geräteschnittstelle unter Verwendung eines jeweils zugehörigen Adapters verschiedenartige digitale Speichermedien angeschlossen werden können. Bei der genannten Schnittstelle handelt es sich in vorteilhafter Weise um eine ohnehin vorhandene Schnittstelle, beispielsweise eine Common-Interface-Schnittstelle oder eine Smart-Card-Schnittstelle.

Werden im Rahmen der Weiterentwicklung des Marktes neue digitale Speichermedien zur Verfügung gestellt, dann können auch diese unter Verwendung eines zugehörigen Adapters mit dem Empfangs- und/oder Wiedergabegerät verbunden werden.

Eine eventuell notwendige Protokollwandlung kann mittels eines Protokollwandlers vorgenommen werden. Dieser kann entweder auf dem Adapter oder im Speichermedium selbst angeordnet sein oder gegebenenfalls auch im digitalen Empfangs- und/oder Wiedergabegerät vorgesehen sein.

Ein weiterer Vorteil der Erfindung besteht darin, dass der Benutzer nicht durch eine Vielfalt von Schlitzen im Gehäuse des digitalen Empfangs- und/oder Wiedergabegerätes überfordert ist, sondern nur einen Schlitz vorfindet, in welchen er den Adapter, den er benötigt, einstecken kann.

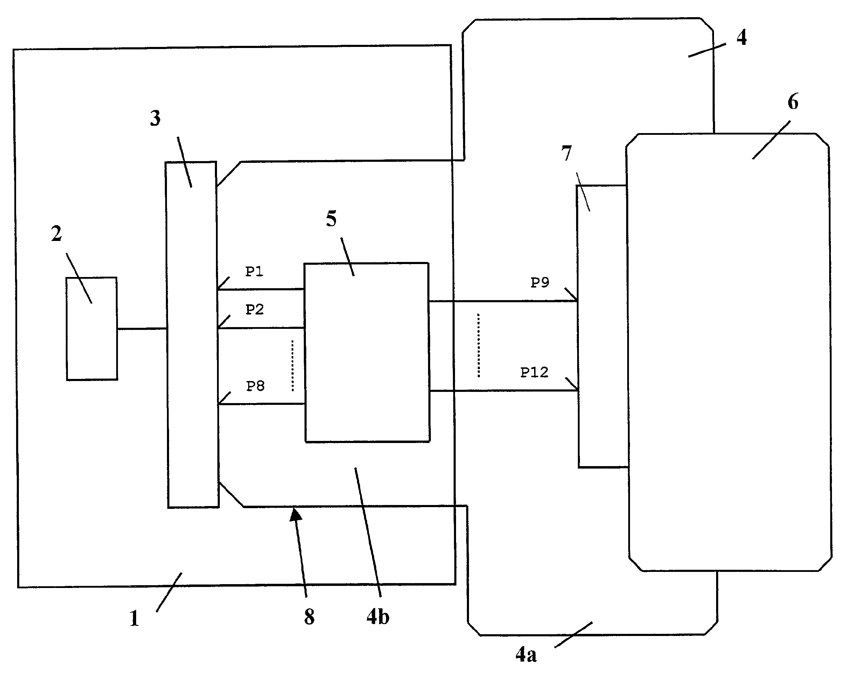

Weitere vorteilhafte Eigenschaften der Erfindung ergeben sich aus deren Erläuterung anhand der Figur.

Diese zeigt eine Skizze einer Vorrichtung zur Übertragung von Bild- oder Tonsignaldaten zwischen einem digitalen Empfangs- und/oder Wiedergabegerät 1 und einem digitalen Speicher 6.

Die in der Figur dargestellte Vorrichtung enthält ein digitales Empfangsund/oder Wiedergabegerät 1 für Audio- oder Videosignale. Bei diesem Gerät kann es sich beispielsweise um eine Settop-Box oder einen digitalen Fernsehempfänger handeln. Für die nachfolgende Beschreibung wird angenommen, dass es sich beim Empfangs- und/oder Wiedergabegerät um eine Settop-Box handelt.

Diese ist mit einer zentralen Steuereinheit 2 versehen, die in Form eines Mikrocomputers realisiert ist. Der Mikrocomputer 2 steht mit einer Schnittstelle 3 der Settop-Box in Verbindung. Bei dieser Schnittstelle 3 handelt es sich entweder um eine Common-Interface-Schnittstelle (CI-Schnittstelle), die zum Anschluss von Zusatzmodulen vorgesehen ist, oder um eine Smartcard-Interface-Schnittstelle, über welche eine Smartcard mit der Settop-Box kontaktiert werden kann.

Zusatzmodule, die über die CI-Schnittstelle mit der Settop-Box verbunden werden können, enthalten beispielsweise einen Entschlüssler, einen Dolby-Surround-Sound-Decoder, einen AC3-Decoder oder einen Synthesizer. Dem Zusatzmodul werden über die Schnittstelle 3 in einem MPEG-Transportstrom enthaltene digitale Video- und/oder Audiosignale zugeführt, die im Zusatzmodul in gewünschter Weise verarbeitet und dann wiederum über die Schnittstelle 3 an die Settop-Box zurückgeführt werden.

Bei dem beschriebenen Zusatzmodul handelt es sich vorzugsweise um einen flachen, diskettenähnlichen Baustein, welcher durch einen Eingabeschlitz 8 der Settop-Box in diese einsteckbar ist und welcher im eingesteckten Zustand mit der Geräteschnittstelle 3 kontaktiert ist.

Handelt es sich bei der Schnittstelle 3 um eine Smartcard-Interface-Schnittstelle, dann kann über diese Schnittstelle eine Smartcard mit der Settop-Box verbunden werden. Diese Smartcard enthält beispielsweise Zugangsberechtigungsdaten, die zu einer Inbetriebnahme der Settop-Box notwendig sind.

Gemäß der Erfindung wird nun die ohnehin vorhandene Schnittstelle 3 dazu verwendet, auch digitale Speichermedien wie eine Multimediacard, eine Smartmediacard, ein Compact-Flash oder eine SD-Card mit der Settop-Box 1 zu verbinden und eine Übertragung von Audio- oder Videosignaldaten zwischen dem digitalen Speichermedium und der Settop-Box durchzuführen.

Da sich die genannten digitalen Speichermedien bezüglich ihrer Gehäuseformen sowohl voneinander als auch von einer Smartcard und einem CI-Modul unterscheiden, werden die genannten Speichermedien unter Verwendung eines Adapters 4 mit der Settop-Box 1 verbunden.

Dieser Adapter weist zwei Bereiche auf. Der Bereich 4b wird in den Gehäuseschlitz 8 der Settop-Box eingeschoben, so dass die Anschlusspins P1 bis P8 des Adapters 4 mit der Schnittstelle 3 kontaktiert sind. Der Bereich 4a des Adapters 4 ist ein Überstandsbereich, der bei eingeschobenem Adapter aus dem Gehäuse der Settop-Box herausragt und in diesem über die Settop-Box hinausragenden Überstandsbereich verbreitert ausgebildet ist.

In diesem Überstandsbereich 4a ist eine Schnittstelle 7 vorgesehen, über welche der Adapter 4 mit dem jeweils vorliegenden digitalen Speichermedium 6 kontaktiert ist. Zu diesem Zweck dienen die in der Figur beispielhaft dargestellten Anschlusspins P9 - P12.

Da sich - wie bereits ausgeführt wurde - die Gehäuseformen verschiedener digitaler Speichermedien voneinander unterscheiden - ist für jedes dieser Speichermedien ein eigener Adapter vorgesehen, über welchen das jeweilige Speichermedium mit der Settop-Box verbunden werden kann. Die Schnittstelle 7 dieses Adapters ist bezüglich der Anzahl ihrer Anschlusspins an das jeweilige Speichermedium angepasst. Ein Benutzer, der ein bestimmtes dieser Speichermedien verwenden möchte, erwirbt dann neben dem Speichermedium auch den zugehörigen Adapter und kann dann das Speichermedium über diesen Adapter mit der Settop-Box verbinden.

Die Settop-Box selbst hat nur diesen einen Eingabeschlitz und kann aus diesem Grund vergleichsweise einfach und preisgünstig ausgeführt sein, da verschiedenartige digitale Speichermedien über ein und dieselbe Schnittstelle mit der Settop-Box kontaktierbar sind.

Da jedem der oben genannten Speichermedien auch sein eigenes Datenprotokoll zugeordnet ist, welches sich von den Datenprotokollen eines Cl-Zusatzmoduls und einer Smartcard unterscheidet, weist der jeweilige Adapter 4 auch einen Protokollwandler 5 auf, der in Form eines Mikrocomputers realisiert sein kann.

Die von dem jeweiligen Speichermedium 6 gelesenen Daten werden über die Schnittstelle 7 ausgelesen und an den Mikrocomputer 5 weitergeleitet, in welchem eine Protokollwandlung in das jeweils notwendige Zielprotokoll erfolgt. Das Zielprotokoll ist dann, wenn die Schnittstelle 3 eine Smartcard-Interface-Schnittstelle ist, das Smartcard-Datenprotokoll, und dann, wenn die Schnittstelle 3 eine CI-Schnittstelle ist, das CI-Datenprotokoll.

Die protokollgewandelten Signale werden vom Mikrocomputer 5 aus über die Schnittstelle 3 in die Settop-Box 1 übertragen und dort in gewünschter Weise weiterverarbeitet.

Auf entsprechende Weise kann auch eine Datenübertragung von der Settop-Box 1 aus über die Schnittstelle 3 und den Adapter 4 an das digitale Speichermedium 6 durchgeführt werden, wobei auch hier im Mikrocomputer 5 eine Protokollwandlung erfolgt.

Gemäß einer weiteren Ausführungsform kann der Protokollwandler auch integrierter Bestandteil der Settop-Box sein. Bei dieser Ausführungsform benötigt der Protokollwandler Informationen über die Identität bzw. Art des jeweils angeschlossenen digitalen Speichermediums. Diese Information ist in einem Speicher abgespeichert, der entweder im Adapter 4 oder im Speichermedium 6 selbst vorgesehen ist, und wird nach der Kontaktierung an die Settop-Box 1 übertragen.

Eine andere Ausführungsform des Identifizierungsvorganges besteht darin, unbenutzte Pins des Adapters 4 in charakteristische Weise mit einer Codierung zu versehen, die dann von der Settop-Box erkannt wird. Eine derartige charakteristische Codierung kann beispielsweise dadurch herbeigeführt werden, dass eines oder mehrere der unbenutzten Pins gegen Masse geschaltet werden.

Ein wesentlicher Vorteil der dargestellten Vorrichtung besteht in ihrer Zukunftssicherheit. Stellt der Markt ein neuartiges digitales Speichermedium zur Verfügung, welches sich in Bezug auf seine Gehäuseform und das verwendete Datenprotokoll von bisher bekannten Speichermedien unterscheidet, dann kann dieses neuartige digitale Speichermedium unter Verwendung eines zugehörigen Adapters, welcher die zur Einführung in den Geräteschlitz notwendige Form aufweist und welcher den notwendigen Protokollwandler enthält, mit dem jeweiligen digitalen Empfangs- und/oder Wiedergabegerät zum Zwecke einer Datenübertragung kontaktiert werden.

## Patentansprüche

1. Vorrichtung zur Übertragung von Bild- oder Tonsignaldaten, mit
- einem digitalen Empfangs- und/oder Wiedergabegerät, welches eine erste Schnittstelle für ein Zusatzmodul aufweist, und
- einem digitalen Speichermedium, welches zu einer Abspeicherung der Bildoder Tonsignale dient,
**dadurch gekennzeichnet, dass**
- das Zusatzmodul (4) ein Adapter ist, welcher eine zweite Schnittstelle (7) für das digitale Speichermedium (6) aufweist, und
- das digitale Speichermedium (6) mit der zweiten Schnittstelle (7) kontaktiert ist.

2. Vorrichtung nach Anspruch 1,
**dadurch gekennzeichnet, dass**
die erste Schnittstelle (3) eine Common-Interface-Schnittstelle ist.

3. Vorrichtung nach Anspruch 1,
**dadurch gekennzeichnet, dass**
die erste Schnittstelle (3) eine Smart-Card-Interface-Schnittstelle ist.

4. Vorrichtung nach einem der vorhergehenden Ansprüche,
**dadurch gekennzeichnet, dass**
das digitale Speichermedium (6) eine Multimedia-Card, eine Smartmedia-Card, ein Compactflash oder eine SD-Card ist.

5. Vorrichtung nach einem der vorhergehenden Ansprüche,
**dadurch gekennzeichnet, dass**
der Adapter in einen Gehäuseschlitz (8) des digitalen Empfangs- und/oder Wiedergabegerätes (1) eingeschoben ist und einen Überstandsbereich (4a) aufweist, der im eingeschobenen Zustand des Adapters aus dem Gehäuse des digitalen Empfangs- und/oder Wiedergabegerätes herausragt.

6. Vorrichtung nach Anspruch 5,
**dadurch gekennzeichnet, dass**
der aus dem Gehäuse des Empfangs- und/oder Wiedergabegerätes herausragende Überstandsbereich (4a) des Adapters (4) breiter ausgebildet ist als der in den Gehäuseschlitz (8) eingeschobene Bereich (4b) des Adapters.

7. Vorrichtung nach einem der vorhergehenden Ansprüche,
**dadurch gekennzeichnet, dass**
der Adapter (4) einen Protokollwandler (5) aufweist.

8. Vorrichtung nach einem der Ansprüche 1 - 6,
**dadurch gekennzeichnet, dass**
das Aufzeichnungs- und/oder Wiedergabegerät einen Protokollwandler (2) aufweist.

9. Vorrichtung nach einem der vorhergehenden Ansprüche,
**dadurch gekennzeichnet, dass**
der Adapter (4) einen Speicher (5) aufweist, der zur Abspeicherung von Identifizierungsinformationen dient.

10. Vorrichtung nach Anspruch 9,
**dadurch gekennzeichnet, dass**
der Speicher (5) des Adapters (4) über die erste Schnittstelle (3) mit einer Steuereinheit (2) des Empfangs- und/oder Wiedergabegerätes (1) verbunden ist.

11. Vorrichtung nach einem der vorhergehenden Ansprüche,
**dadurch gekennzeichnet, dass**
der Adapter (4) Anschlusspins aufweist, die mit einer vorgegebenen Codierung versehen sind.

12. Adapter zur Verwendung in einer Vorrichtung nach einem der Ansprüche 1 bis 11.
